# EUROPEAN PATENT SPECIFICATION

(11) **EP 3 527 925 B1**
(45) Date of publication and mention of the grant of the patent: **06.01.2021**
(21) Application number: 19158007.5
(22) Date of filing: 19.02.2019
(51) Int. Cl.: F28F 19/00, B64D 37/34

(54) **CLOSED LOOP ICING CONTROL FOR HEAT EXCHANGERS**
GESCHLOSSENSCHLEIFIGE VEREISUNGSSTEUERUNG FÜR WÄRMETAUSCHER
COMMANDE DE GIVRAGE EN BOUCLE FERMÉE POUR ÉCHANGEURS DE CHALEUR

(30) Priority: 19.02.2018 US 201815899084
(43) Date of publication of application: 21.08.2019
(73) Proprietor: Hamilton Sundstrand Corporation, Charlotte, NC 28217-4578 (US)
(72) Inventor: RHODEN, William E., Glastonbury, Connecticut 06033 (US)
(74) Representative: Dehns

(56) References cited:
- EP-A2- 2 423 106
- WO-A2-2015/130356
- US-A1- 2013 232 989

## Description

### BACKGROUND

This application relates to an apparatus and method for removing ice particles in a subfreezing cooling fluid source for a heat exchanger.

Heat exchangers are used in any number of applications. In general, a fluid to be cooled is passed through a heat exchanger and a second cooling fluid, which is at a lower temperature than the fluid to be cooled, passes through the heat exchanger. The two flows are maintained separate and the cooling fluid cools the fluid to be cooled.

One application where a number of heat exchanger applications occur is on an aircraft. On an aircraft, the cooling fluid is often air brought in from outside the aircraft. Such air may be at very low temperatures and thus is a good source for a cooling fluid.

Fuel at subfreezing temperatures may also be used as a cooling fluid. The use of subfreezing cooling fluid does raise challenges.

Documents US 2013/232989 A1 and EP 2 423 106 A2 for example disclose a heat exchanger as defined in the preamble of claim 1.

### SUMMARY

A heat exchanger has a heat exchanger body, an inlet for a fluid to be cooled, and an outlet for the fluid to be cooled. There is also an inlet for a cooling fluid and an outlet for the cooling fluid. The cooling fluid and the fluid to be cooled connects to the heat exchanger, but are maintained separate in the heat exchanger such that the cooling fluid lowers the temperature of the fluid to be cooled An optical ice detector detects an undesirable amount of ice particles in the cooling fluid. A control receives information from the ice detector and controls electric heating elements should an undesirable amount of ice particles be detected.

An aircraft incorporating a heat exchanger is also disclosed.

These and other features may be best understood from the following drawings and specification.

### BRIEF DESCRIPTION OF THE DRAWINGS

Figure 1 shows a first heat exchanger and control system.
Figure 2 shows a second embodiment.
Figure 3 shows an optional feature.
Figure 4 shows a detail.
Figure 5 shows a detail.
Figure 6 shows a detail.

### DETAILED DESCRIPTION

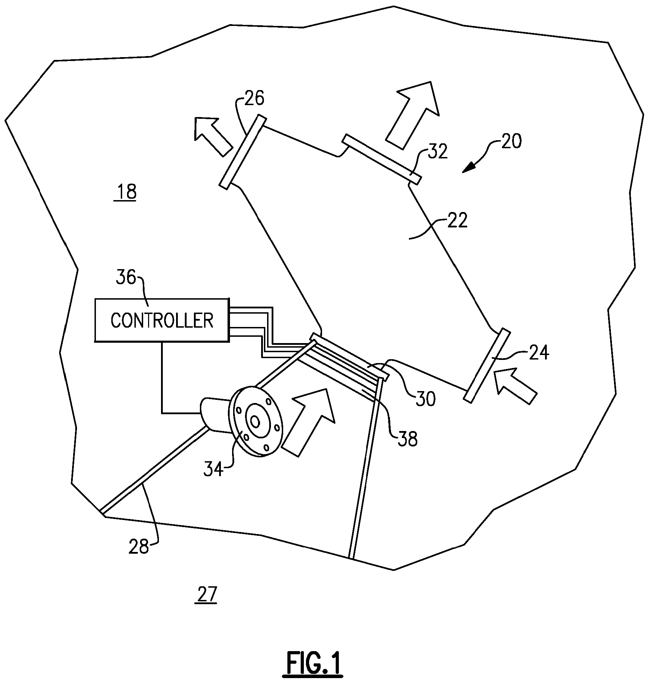

An aircraft 18 is shown schematically in Figure 1 including a heat exchanger 20. The heat exchanger 20 may include a heat exchanger body 22 and may function as a condenser for a refrigerant system that may be incorporated for use on the aircraft 18. Hot refrigerant to be cooled enters at inlet 24, is cooled within the body 22, and leaves at an outlet 26, having been cooled by cooling air from a duct 28. Duct 28 may be drawn from outside the aircraft, such as shown at 27. This air may be at very low temperatures. It is possible there could be ice particles in this air. The ice particles can decrease the efficiency of operation of the heat exchanger 20. The air enters inlet 30, cools the fluid to be cooled and outlets at 32.

As known, the flow from inlet 30 to outlet 32 is maintained separate from the flow between inlet 24 and outlet 26.

An ice detector 34, such an optical ice detector, monitors the cooling air passing toward the inlet 30. Alternatively, the optical detector can detect ice build up on the heat exchanger face. If an undesirable amount of ice particles are detected, the controller 36 will send a signal to actuate a heater 38, which is in the path of flow of the air passing to the inlet 30. This will tend to melt the ice particles, such that the efficiency of the heat exchanger 20 is maintained. The heater 38 may include elements of a resistive nature. When power is applied the wires heat up. Now, the use of the control and heater thus provide a simple and reliable way of decreasing ice particle flow to a heat exchanger when an inlet airflow is at temperatures below the freezing point of water.

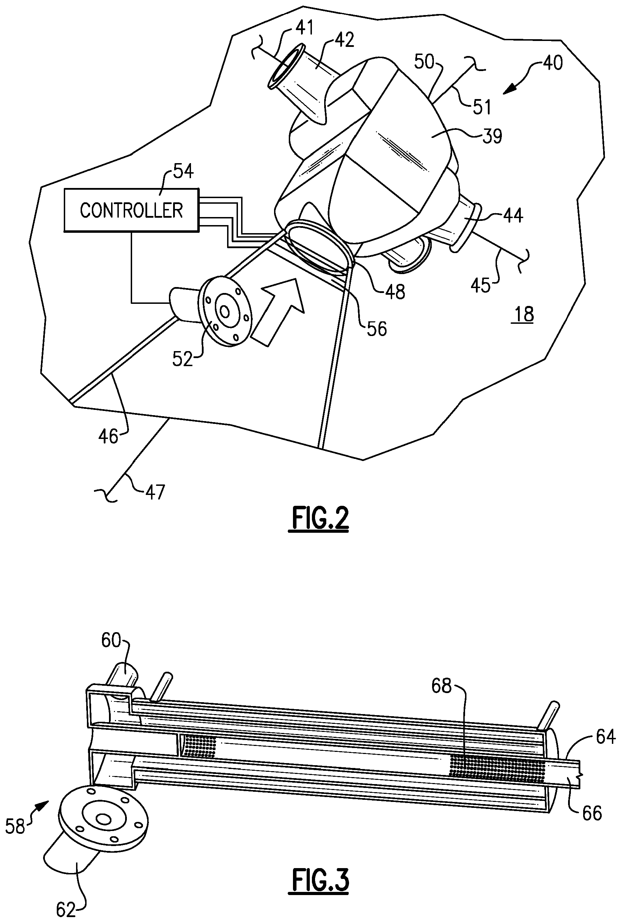

Figure 2 shows a fuel oil cooler 40 having a heat exchanger body 39. Oil passes from a line 41 into an inlet 42, and across the heat exchanger to an outlet 44, into a return line 45. The oil is at a hot temperature, such as may be found downstream of a lubrication application for the oil. The oil may then pass back to a sump or pump to be utilized again as a lubricant.

Duct 46 communicates, such as with the fuel supply 47, and connects the fuel to an inlet 48. The fuel passes across the heat exchanger body 39 to an outlet 50 and may then move into a line 51, such as heading to a combustor for a gas turbine engine.

As known, the fuel may be at very low temperatures and may be below the freezing point of water. Thus, the possibility exists for ice particles to be in the fuel flow heading into the heat exchanger 39.

Again, an ice detector 52, which in one embodiment is an optical ice detector, senses an amount of ice particles in the flow. A control 54 selectively actuates heater elements 56 to remove the ice particles when they are detected in an undesirable level.

Figure 3 shows an optional feature wherein an ice filter 58 is also utilized. The ice filter may include an inlet 60 passing a cooling fluid, which may include ice, to an inner tube 64 and an outlet 66 through holes 68. The ice filter 58 may be utilized in either the Figure 1 or Figure 2 embodiment. An ice detector 62 again detects an undue amount of ice in the inlet and may actuate heater elements as in the first two embodiments, such as on the inlet to a heat exchanger.

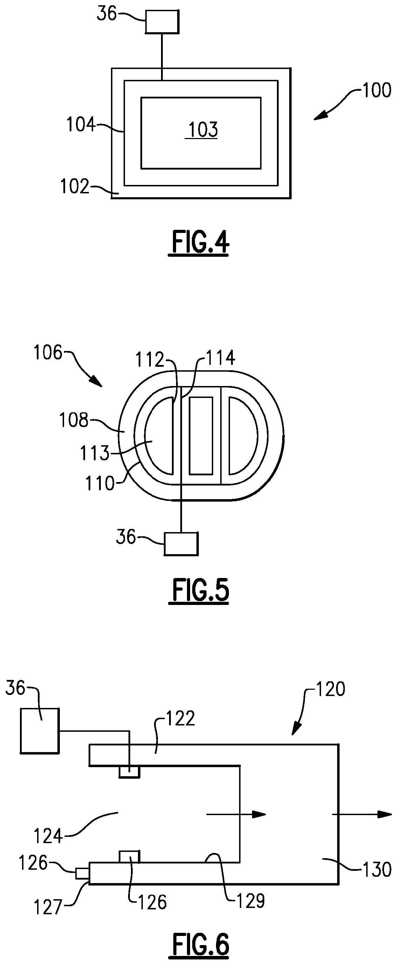

Figure 4 shows a detail of a heat exchanger 100 having a front face 102. The nature of the heater element 104 will be defined by the front face 102. In this embodiment the heater is shown extending around the periphery of the front face 102, and outwardly of a central flow path 103.

Figure 5 shows an embodiment 106 wherein the front face 108 has crossing members 112 across the flow area 113 such that heater element 110 can have branches 114 extending across the flow area 113 to provide improved ice management.

Figure 6 shown an embodiment 120 wherein a plenum 122 leads to the heat exchanger 130. The plenum has a flow area 124 receiving the cooling fluid, and the heater element 126 may be positioned either at an upstream end 127 or within an inner periphery 129 defining the plenum area 124.

While the operation of the system as disclosed above indicates the heat element is turned on when an undesirable amount of ice particles are detected, it should be understood that the "undesirable amount" could be any ice particles. That is, the detection of even a single ice particle could cause operation of the heater element.

Although an embodiment of this invention has been disclosed, a worker of ordinary skill in this art would recognize that certain modifications would come within the scope of the invention as defined by the claims. For that reason, the following claims should be studied to determine the scope of the invention.

## Claims

1. A heat exchanger comprising:
a heat exchanger body (39), an inlet (24) for a fluid to be cooled, and an outlet (26) for the fluid to be cooled;
an inlet (30) for a cooling fluid and an outlet (32) for the cooling fluid, the cooling fluid and the fluid to be cooled connected to the heat exchanger, but maintained separate in the heat exchanger, such that the cooling fluid may lower the temperature of the fluid to be cooled; and **characterised by**
an optical ice detector (34) for detecting an undesirable amount of ice particles in the cooling fluid, and a control for receiving information from said ice detector and controlling electric heating elements (104) should an undesirable amount of ice particles be detected.

2. The heat exchanger as set forth in claim 1, wherein an ice filter (58) is positioned upstream of said cooling fluid inlet for filtering ice particles from the cooling fluid.

3. The heat exchanger as set forth in claim 2, wherein said ice detector is positioned upstream of an outlet from said ice filter leading into said cooling fluid inlet at said heat exchanger.

4. The heat exchanger as set forth in any preceding claim, wherein said electric heating elements are positioned on an outer face of said heat exchanger.

5. The heat exchanger as set forth in claim 4, wherein crossing members (112) are formed on said outer face and across a flow area into said heat exchanger, and said electric heating elements are also placed on said crossing members.

6. The heat exchanger as set forth in any preceding claim, wherein a plenum (122) leads to said heat exchanger, and said electric heating elements are placed on said plenum.

7. The heat exchanger as set forth in any preceding claim, wherein the cooling fluid is air potentially at a temperature below the freezing point of water.

8. The heat exchanger as set forth in claim 7, wherein said cooling air is from outside of an aircraft receiving said heat exchanger.

9. The heat exchanger as set forth in any preceding claim, wherein said heat exchanger is a fuel oil cooler (40), with said fluid to be cooled being oil, and said cooling fluid being fuel.

10. An aircraft comprising:
a heat exchanger as claimed in any preceding claim, and
an aircraft body enclosing the heat exchanger body, the inlet for fluid to be cooled, and the outlet for the fluid to be cooled.

## Patentansprüche

1. Wärmetauscher, umfassend:
einen Wärmetauscherkörper (39), einen Einlass (24) für ein zu kühlendes Fluid und einen Auslass (26) für das zu kühlende Fluid;
einen Einlass (30) für ein Kühlfluid und einen Auslass (32) für das Kühlfluid, wobei das Kühlfluid und das zu kühlende Fluid mit dem Wärmetauscher verbunden sind, aber getrennt in dem Wärmetauscher gehalten werden, sodass das Kühlfluid die Temperatur des zu kühlenden Fluids senken kann; und **gekennzeichnet durch**
einen optischen Eisdetektor (34) zum Detektieren einer unerwünschten Menge von Eispartikeln in dem Kühlfluid, und eine Steuerung zum Empfangen von Informationen von dem Eisdetektor und Steuern elektrischer Heizelemente (104), wenn eine unerwünschte Menge von Eispartikeln detektiert wird.

2. Wärmetauscher nach Anspruch 1, wobei ein Eisfilter (58) stromaufwärts von dem Kühlfluideinlass zum Filtern von Eispartikeln aus dem Kühlfluid positioniert ist.

3. Wärmetauscher nach Anspruch 2, wobei der Eisdetektor stromaufwärts von einem Auslass von dem Eisfilter, der in den Kühlfluideinlass des Wärmetauschers führt, positioniert ist.

4. Wärmetauscher nach einem der vorhergehenden Ansprüche, wobei die elektrischen Heizelemente auf einer Außenseite des Wärmetauschers positioniert sind.

5. Wärmetauscher nach Anspruch 4, wobei Kreuzungselemente (112) auf der Außenseite und über einen Strömungsbereich in den Wärmetauscher ausgebildet sind und sich die elektrischen Heizelemente auch auf den Kreuzungselementen befinden.

6. Wärmetauscher nach einem der vorhergehenden Ansprüche, wobei eine Kammer (122) zu dem Wärmetauscher führt und sich die elektrischen Heizelemente auf der Kammer befinden.

7. Wärmetauscher nach einem der vorhergehenden Ansprüche, wobei das Kühlfluid Luft ist, die potenziell bei einer Temperatur unter dem Gefrierpunkt von Wasser liegt.

8. Wärmetauscher nach Anspruch 7, wobei die Kühlluft vom Äußeren eines Luftfahrzeugs, das den Wärmetauscher empfängt, stammt.

9. Wärmetauscher nach einem der vorhergehenden Ansprüche, wobei der Wärmetauscher ein Kraftstoff-Öl-Kühler (40) ist, wobei das zu kühlende Fluid Öl ist und das Kühlfluid Kraftstoff ist.

10. Luftfahrzeug, umfassend:
einen Wärmetauscher nach einem der vorhergehenden Ansprüche, und
einen Luftfahrzeugkörper, der den Wärmetauscherkörper, den Einlass für zu kühlendes Fluid und den Auslass für das zu kühlende Fluid umschließt.

## Revendications

1. Échangeur de chaleur comprenant :
un corps d'échangeur de chaleur (39), une entrée (24) pour un fluide à refroidir, et une sortie (26) pour le fluide à refroidir ;
une entrée (30) pour un fluide de refroidissement et une sortie (32) pour le fluide de refroidissement, le fluide de refroidissement et le fluide à refroidir étant reliés à l'échangeur de chaleur, mais maintenus séparés dans l'échangeur de chaleur, de sorte que le fluide de refroidissement peut abaisser la température du fluide à refroidir ; et **caractérisé par**
un détecteur de glace optique (34) pour détecter une quantité indésirable de particules de glace dans le fluide de refroidissement, et une commande pour recevoir des informations provenant dudit détecteur de glace et commander des éléments chauffants électriques (104) en cas de détection d'une quantité indésirable de particules de glace.

2. Échangeur de chaleur selon la revendication 1, dans lequel un filtre à glace (58) est positionné en amont de ladite entrée de fluide de refroidissement pour la filtration des particules de glace provenant du fluide de refroidissement.

3. Échangeur de chaleur selon la revendication 2, dans lequel ledit détecteur de glace est positionné en amont d'une sortie dudit filtre à glace menant vers ladite entrée de fluide de refroidissement au niveau dudit échangeur de chaleur.

4. Échangeur de chaleur selon une quelconque revendication précédente, dans lequel lesdits éléments chauffants électriques sont positionnés sur une face extérieure dudit échangeur de chaleur.

5. Échangeur de chaleur selon la revendication 4, dans lequel des éléments croisés (112) sont formés sur ladite face extérieure et à travers une zone d'écoulement dans ledit échangeur de chaleur, et lesdits éléments chauffants électriques sont aussi placés sur lesdits éléments croisés.

6. Échangeur de chaleur selon une quelconque revendication précédente, dans lequel un plénum (122) mène audit échangeur de chaleur, et lesdits éléments chauffants électriques sont placés sur ledit plénum.

7. Échangeur de chaleur selon une quelconque revendication précédente, dans lequel le fluide de refroidissement est de l'air potentiellement à une température inférieure au point de congélation de l'eau.

8. Échangeur de chaleur selon la revendication 7, dans lequel ledit air de refroidissement provient de l'extérieur d'un aéronef recevant ledit échangeur de chaleur.

9. Échangeur de chaleur selon une quelconque revendication précédente, dans lequel ledit échangeur de chaleur est un refroidisseur carburant-huile (40), ledit fluide à refroidir étant de l'huile, et ledit fluide de refroidissement étant du carburant.

10. Aéronef comprenant :
un échangeur de chaleur selon une quelconque revendication précédente, et
un corps d'aéronef renfermant le corps d'échangeur de chaleur, l'entrée pour le fluide à refroidir, et la sortie pour le fluide à refroidir.
